# EUROPÄISCHE PATENTSCHRIFT

(11) **EP 0 886 821 B1**
(45) Veröffentlichungstag und Bekanntmachung des Hinweises auf die Patenterteilung: **16.02.2000**
(21) Anmeldenummer: 97916320.1
(22) Anmeldetag: 03.03.1997
(51) Int. Cl.: G06F 3/14

(54) **BETRIEB MEHRERER SICHTGERÄTE AN EINER BILDSCHIRMSTEUERUNG**
OPERATION OF SEVERAL VISUAL DEVICES ON ONE VISUAL DISPLAY SYSTEM
UTILISATION DE PLUSIEURS UNITES D'AFFICHAGE BRANCHEES SUR UNE COMMANDE D'ECRAN

(30) Priorität: 12.03.1996 DE 19609667
(43) Veröffentlichungstag der Anmeldung: 30.12.1998
(73) Patentinhaber: Siemens Nixdorf Informationssysteme AG, 33106 Paderborn (DE)
(72) Erfinder: SOMMER, Heinz, D-10589 Berlin (DE); WIDMAIER, Dominik, D-12157 Berlin (DE)
(74) Vertreter: Epping, Wilhelm, Dr.-Ing.
(86) Internationale Anmeldenummer: DE9700390
(87) Internationale Veröffentlichungsnummer: WO9734220

(56) Entgegenhaltungen:
- EP-A- 0 195 203
- DE-A- 4 404 104
- US-A- 4 965 559
- US-A- 5 488 385
- PATENT ABSTRACTS OF JAPAN vol. 18, no. 205 (E-1536), 12.April 1994 & JP 06 006724 A (FUJITSU GENERAL LTD.), 14.Januar 1994

## Beschreibung

Die Erfindung betrifft ein Verfahren und eine Schaltungsanordnung zum unabhängigen Betrieb mehrerer Sichtgeräte an einer Bildschirm-Steuereinheit entsprechend dem Oberbegriff des Anspruchs 1.

An einem Gerät, dessen Steuerung auf der PC-Technologie beruht, wird ein Sichtgerät im allgemeinen an einer beispielsweise nach dem VGA-Standard arbeitenden Monitorschnittstelle betrieben, die von einer speziellen Bildschirm-Steuereinheit -im Beispiel einem sogenannten VGA-Controller- zur Verfügung gestellt wird. Das Software-Betriebssystem des PC enthält ein entsprechendes Treiberprogramm. Sollen mehrere Sichtgeräte angeschlossen werden, die gleichzeitig unterschiedliche Informationen anzeigen sollen, wird für jedes Sichtgerät eine eigene Bildschirm-Steuereinheit benötigt.

Mehrere Sichtgeräte sind allgemein dort erforderlich, wo mehrere Personen Datenerfassungs- oder -bearbeitungsvorgänge beobachten, oder wo verschiedenen Personen nur jeweils ein Teil der Gesamtinformation zugänglich gemacht werden soll. Dies ist beispielsweise an Registrierkassen oder an Dienstleistungsterminals der Fall, die zumindest mit einer Bediener- und einer Kundenanzeige ausgestattet sind. Häufig ist zusätzlich ein Animationsbildschirm für die Wiedergabe von Werbung oder allgemeinen Informationen oder auch eine Nummern-Anzeigeeinrichtung für die Anzeige der Reservierungsnummer eines nächsten Kunden vorgesehen. Für jedes Sichtgerät eine Bildschirm-Steuereinheit vorzusehen ist platzaufwendig und teuer und wirkt sich nachteilig auf die Arbeitsgeschwindigkeit des PC aus.

In der US 4 965 559 ist deshalb vorgeschlagen worden, mehrere Sichtgeräte an einer Bildschirm-Steuereinheit zu betreiben, welche Taktsignale und eine der zeilen- und spaltenmäßigen Auflösung eines zweidimensionalen rechtekkigen Rasterbildes entsprechende Zahl von zeichen- oder bildpunktbezogenen Bilddaten-Signalen abgibt. Dabei werden die zu rechteckigen Teilflächen des Rasterbildes gehörenden Takt- und Bilddaten-Signale jeweils einem Sichtgerät zugeführt. Zusätzlich ist jedoch für jedes Sichtgerät eine individuelle Zuordnungs- oder Anpassungseinrichtung (look-up table) erforderlich.

Aufgabe der Erfindung ist es, ein Verfahren und eine Schaltungsanordnung anzugeben, die den unabhängigen Betrieb mehrerer Sichtgeräte an einer Bildschirm-Steuereinheit erlauben.

Der verfahrensbezogene Teil der Aufgabe wird durch die Merkmale des Anspruchs 1 und der anordnungsbezogene Teil durch die Merkmale des Anspruchs 3 bzw. 4 gelöst.

Die Erfindung benutzt eine Bildschirm-Steuereinheit, welche Taktsignale und eine der zeilen- und spaltenmäßigen Auflösung eines auf einem Sichtgerät darzustellenden zweidimensionalen rechteckigen Rasterbildes entsprechende Zahl von zeichen- bzw. bildpunktbezogenen Bild-Datensignalen abzugeben vermag. Eine solche Steuereinheit ist z.B. ein aus der PC-Welt bekannter VGA-Controller, dessen Auflösung zwischen unterschiedlichen Formaten umschaltbar ist. Ein häufig benutztes Format hat eine Auflösung von 640 Bildpunkten horizontal und 480 Bildpunkten vertikal in der Grafik-Betriebsart bzw. 80 Zeichen/Zeile und 30 Zeilen in der Zeichen-Betriebsart, wobei einem Zeichen eine Fläche von 8x16 Bildpunkten zugeordnet ist. Das Format ist bezogen auf einen sogenannten Voll-Bildschirm, wie er von CRT-Sichtgeräten bekannt ist. Die einzelnen Bildpunkte bzw. die Zeichen werden durch Bild-Datensignale repräsentiert. Zur Vereinfachung der Darstellung der Erfindung wird der folgenden Beschreibung stets ein Vollformat von 640x480 Bildpunkten, entsprechend 30x80 Zeichen zugrunde gelegt. Die Erfindung ist jedoch auch auf jedes andere Format anwendbar.

Neben Vollbildschirmen sind auch Sichtgeräte bekannt, die ein verkleinertes Bildfeld aufweisen, z.B. 320x240, 240x64 oder 120x64 Bildpunkte, entsprechend 15 Zeilen x 40 Zeichen, 4x30 bzw. 4x15 Zeichen. Führt man die Bild-Datensignale und die diese übergebenden Taktsignale rechteckiger Teilflächen des Raster-Vollbildes jeweils einem Sichtgerät zu, so können mehrere Sichtgeräte an einer einzigen Bildschirm-Steuereinheit betrieben werden.

Diese Sichtgeräte können räumlich getrennt voneinander angeordnet sein, z.B. eines auf der Kassiererseite und ein zweites auf der Kundenseite einer Registrierkasse, ein drittes in einer sogenannten Kassenampel oberhalb eines Kassenarbeitsplatzes und ein viertes irgendwo auf der Verkaufsfläche eines Warenhauses.

Sollen die einzelnen Sichtgeräte hinsichtlich der anzuzeigenden Informationen vollständig unabhängig voneinander betrieben werden, muß die Summe der auf allen Sichtgeräten darstellbaren Zeichen bzw. Bildpunkte kleiner oder gleich der Anzahl der von der Bildschirm-Steuereinheit abgegebenen Datensignale sein.

Häufig ist es aber auch erwünscht, zumindest Teile der Informationen auf mehreren Sichtgeräten anzuzeigen. Beispielsweise könnte eine das Tagesdatum und die Uhrzeit enthaltende Bildschirmzeile auf der Kunden- und der Bedieneranzeige angezeigt werden. Dazu sind die diese Bildschirmzeile repräsentierenden Bilddaten- und Taktsignale beiden Sichtgeräten zuzuführen. In diesem Fall darf die Summe der auf allen Sichtgeräten darzustellenden Zeichen bzw. Bildpunkte größer als die Zahl der von der Bildschirm-Steuereinheit abgegebenen Datensignale sein.

Weitere Merkmale und Vorteile der Erfindung ergeben sich aus der folgenden Beschreibung, die in Verbindung mit den beigefügten Zeichnungen die Erfindung anhand mehrerer Ausführungsbeispiele erläutert. Es zeigt
- Fig. 1: eine Schaltungsanordnung mit zwei Sichtgeräten,
- Fig. 2: eine Schaltungsanordnung mit vier Sichtgeräten,
- Fig. 3: eine Schaltungsanordnung mit einem Dual Scan-Sichtgerät nach dem Stand der Technik.

In Fig. 3 ist ein Blockschaltbild einer bekannten Schaltungsanordnung mit einem LCD-Vollbildschirm 310 mit 640x480 Bildpunkten (entsprechend 30x80 Zeichen) dargestellt, der in DSTN- (Dual Scan Super Twisted Nematic) Technologie ausgeführt ist. Das Sichtgerät 310 ist, wie für Dual Scan-LCD-Sichtgeräte charakteristisch, in einen oberen Bereich 312 und einen unteren Bereich 314 aufgeteilt. Der obere Bereich 312 ist über einen oberen Datenbus UDB und der untere Bereich 314 über einen unteren Datenbus LDB mit einer Sichtgeräte-Steuereinheit 10 -einem sogenannten VGA-Controller- verbunden. Als weitere Verbindung zwischen dem Sichtgerät 310 und dem VGA-Controller 10 ist ein Steuerungsbus CB vorgesehen, der beiden Bildschirmbereichen 312, 314 zugeordnet ist, und auf dem die für Dual Scan LCD-Sichtgeräte notwendigen, an sich bekannten Takt- und Steuersignale geführt sind. Der VGA-Controller 10 wird seinerseits über einen weiteren Bus 14 von der Recheneinheit 12 eines ansonsten nicht dargestellten PC angesteuert. Wesentlicher Teil eines VGA-Controllers der genannten Art ist z.B. der "Flat Panel/CRT VGA Controller" 65535 der Fa. Chips and Technologies, Inc., an den lediglich noch ein VGA BIOS und ein Bildwiederholspeicher angeschlossen werden müssen.

Die Erfindung macht sich die Eigenschaften eines "Flat Panel/CRT VGA Controllers" der genannten Art zunutze. Dabei sind wiederkehrende Teile im folgenden mit gleichen Bezugszeichen benannt.

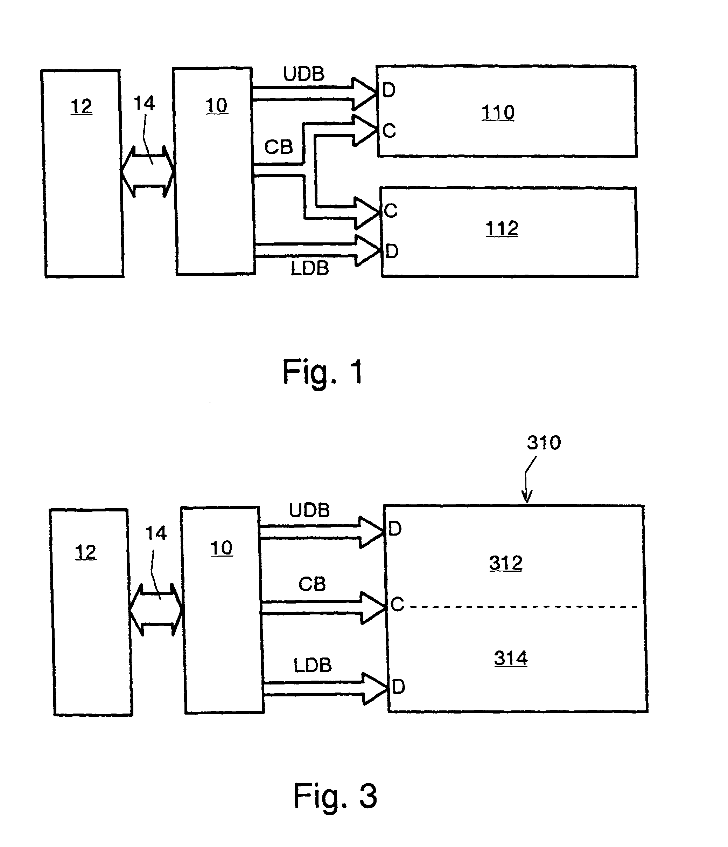

Fig. 1 zeigt in einem Blockschaltbild den Anschluß zweier nach einem an sich bekannten Single Scan-Verfahen arbeitender LCD-Sichtgeräte 110, 112 an einen für Dual Scan-Betrieb eingestellten VGA-Controller 10. Der Dateneingang D des einen Sichtgeräts 110 ist über den oberen Datenbus UDB und der Dateneingang D des anderen 112 über den unteren Datenbus LDB mit dem VGA-Controller 10 verbunden. Der Steuerungsbus CB ist parallel an den Taktsignaleingang C beider Sichtgeräte 110, 112 angeschlossen. Der Anschluß des VGA-Controllers 10 über einen Bus 14 an eine Recheneinheit 12 erfolgt entsprechend dem in Fig. 3 dargestellten Stand der Technik.

Bei voneinander unabhängigem Betrieb können die Sichtgeräte 110, 112 ein maximales Format von 320x480 Bildpunkten, entsprechend 15x80 Zeichen haben. In Zeichen-Betriebsart werden auf dem mit dem oberen Datenbus UDB verbundenen Sichtgerät 110 die ersten fünfzehn Zeilen und auf dem mit dem unteren Datenbus LDB verbundenen Sichtgerät 112 die zweiten fünfzehn Zeilen eines Vollbildes dargestellt. Für die Grafik-Betriebsart gilt entsprechendes. Es können aber auch marktgängige kleinere Formate mit z.B. 320x240 Bildpunkten, entsprechend 15 Zeilen zu 40 Zeichen angeschlossen werden, die die Darstellungskapazität des Vollformates dann nur teilweise ausnutzen.

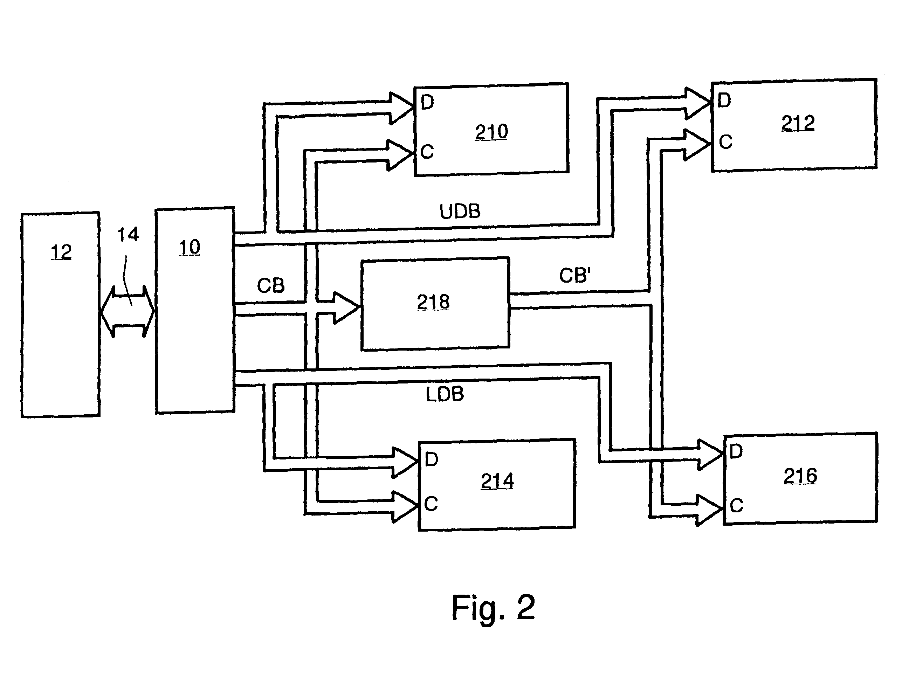

Fig. 2 zeigt in einem Blockschaltbild den Anschluß von vier nach dem Single Scan-Verfahen arbeitenden LCD-Sichtgeräten 210, 212, 214, 216 an einen für Dual Scan-Betrieb eingestellten VGA-Controller 10. Die Dateneingänge D der Sichtgeräte 210 und 212 sind über den oberen Datenbus UDB und die Dateneingänge D der Sichtgeräte 214 und 216 über den unteren Datenbus LDB mit dem VGA-Controller 10 verbunden. Die Taktsignaleingänge C der Sichtgeräte 210, 214 sind direkt an den Steuerungsbus CB angeschlossen, während die Taktsignaleingänge C der Sichtgeräte 212, 216 an einen Steuerungsbus CB' angeschlossen sind, dem eine Torschaltung 218 mit einem Zähler vorgeschaltet ist. Diese unterdrückt die Taktsignale der Bildinformationen, die auf den direkt angesteuerten Sichtgeräten 210, 214 dargestellt werden.

Bei voneinander unabhängigem Betrieb können die Sichtgeräte 210-216 ein maximales Format von 320x240 Bildpunkten, entsprechend 15x40 Zeichen haben. In Zeichen-Betriebsart werden auf dem ersten Sichtgerät 210 die Stellen 1-40 der Zeilen 1-15 eines Vollbildes dargestellt, auf Sichtgerät 212 die Stellen 41-80 der Zeilen 1-15, auf Sichtgerät 214 die Stellen 1-40 der Zeilen 16-30 und auf Sichtgerät 216 die Stellen 41-80 der Zeilen 16-30. Das Sichtgerät 210 bildet also das linke obere Viertel eines Vollbildes ab, Sichtgerät 212 das rechte obere Viertel, Sichtgerät 214 das linke untere Viertel und Bildschirm 216 das rechte untere Viertel. Für die Grafik-Betriebsart gilt entsprechendes. Es können auch Sichtgeräte mit kleinerem Format angeschlossen werden. Die Darstellungskapazität des Vollformates wird dann nur teilweise ausgenutzt.

Haben die linken Sichtgeräte 210, 214 eine unterschiedliche Stellenzahl, ist jedem rechten Sichtgerät eine eigene Torschaltung zuzuordnen, oder es wird eine Torschaltung mit mehreren Ausgängen eingesetzt, die Taktsignale nach der jeweils erforderlichen Zahl von Schritten abgeben.

Der Anschluß des VGA-Controllers 10 über einen Bus 14 an eine Recheneinheit 12 erfolgt wiederum entsprechend dem in Fig. 3 dargestellten Stand der Technik.

Die anhand der Figuren 1 und 2 erläuterten Ausführungsbeispiele können auch miteinander kombiniert werden: Beispielsweise können an den oberen Datenbus UDB ein Sichtgerät mit 15X80 Zeichen, entsprechend 320x480 Bildpunkten, und an den unteren Datenbus LDB zwei Sichtgeräte mit 15x40 Zeichen, entsprechend je 320x240 Bildpunkten angeschlossen werden. In Zeichen-Betriebsart werden auf dem oberen Sichtgerät dann die Stellen 1-80 der Zeilen 1-15 eines Vollbildes dargestellt, auf den unteren Sichtgeräten die Stellen 1-40 bzw. 41-80 der Zeilen 16-30.

In allen Beispielen können die Sichtgeräte auch ein größeres Format haben. Die für einen Bildschirm bestimmten Informationen nehmen dann nur einen Teil der Bildschirmfläche ein, während auf der restlichen Fläche Informationen erscheinen, die auch auf einem Nachbar-Sichtgerät abgebildet werden. Dies kann in einfacher Weise zur gleichzeitigen Darstellung von Informationen auf mehreren Sichtgeräten ausgenutzt werden. Ist dies nicht gewünscht, muß die Weiterleitung der Bilddaten- und Taktsignale der letztgenannten Informationen unterdrückt werden.

Der Betrieb mehrerer Sichtgeräte in der dargestellten Weise an einer einzigen Bildschirm-Steuereinheit 10 hat den Vorteil, daß statt ihrer auch ein einziger Vollbildschirm angeschlossen werden kann, ohne daß die Anzeigeprogramme geändert werden müßten. Beim Erstellen und Testen von Anwenderprogrammen werden dem Programmierer die Inhalte der Sichtgeräte 110, 112 bzw. 210-216 als Teilflächen auf einem einzigen Sichtgerät angezeigt. Es ist auch möglich, solche Programme auf einem standardmäßig ausgestatteten PC zu erstellen und zu testen, ohne die verschiedenen Sichtgeräte zur Verfügung zu haben. Ähnliche Vorteile ergeben sich auch bei der Installation und Wartung einer Anlage, deren Sichtgeräte unter Umständen weit verteilt aufgestellt und deshalb mit einem Blick nicht zu erfassen sind.

## Patentansprüche

1. Verfahren zum unabhängigen Betrieb mehrerer Sichtgeräte an einer Bildschirm-Steuereinheit, welche Taktsignale und eine der zeilen- und spaltenmäßigen Auflösung eines auf einem Voll-Bildschirm darzustellenden zweidimensionalen rechteckigen Rasterbildes entsprechende Zahl von zeichen- oder bildpunktbezogenen Bilddaten-Signalen abgibt, wobei die zu rechteckigen Teilflächen des Rasterbildes gehörenden Takt- und Bilddaten-Signale jeweils einem Sichtgerät (110, 112; 210, 212, 214, 216) zugeführt werden und die Summe der getrennt ansteuerbaren Zeichenflächen oder Bildpunkte aller Sichtgeräte (110, 112; 210, 212, 214, 216) kleiner oder gleich der Anzahl der von der Bildschirm-Steuereinheit (10) abgegebenen Takt- und Bilddaten-Signale ist,
**dadurch gekennzeichnet,**
daß die Sichtgeräte (110, 112; 210, 212, 214, 216) in Single Scan-Betriebsart an einer auf Dual Scan-Betriebsart eingestellten Bildschirm-Steuereinheit (10) betrieben werden.

2. Verfahren nach Anspruch 1, bei dem die Summe der auf allen Sichtgeräten (110, 112; 210, 212, 214, 216) darstellbaren Zeichen bzw. Bildpunkte größer als die Zahl der von der Bildschirm-Steuereinheit (10) abgegebenen Bild-Datensignale ist und Takt- und/oder Bilddaten-Signale zumindest eines Teils einer Teilfläche mehr als einem Sichtgerät zugeführt werden.

3. Schaltungsanordnung zur Durchführung des Verfahrens nach einem der Ansprüche 1 oder 2 zum unabhängigen Betrieb zweier in Single Scan-Betriebsart arbeitender, einen Dateneingang (D) und einen Taktsignaleingang (C) aufweisender Sichtgeräte (110, 112), deren eines (110) dazu bestimmt ist, eine obere Teilfläche und deren anderes (112) eine untere Teilfläche eines Vollbildes anzuzeigen, umfassend eine auf Dual Scan-Betriebsart eingestellte Bildschirmsteuereinheit (10) mit einem oberen Datenbus (UDB), einem unteren Datenbus (LDB) und einem Steuerungsbus (CB), wobei die Taktsignaleingänge (C) beider Sichtgeräte (110, 112) parallel an den Steuerungsbus (CB) der Bildschirm-Steuereinheit (10), der Dateneingang (D) des einen Sichtgerätes (110) an den oberen Datenbus (UDB) und der Dateneingang (D) des anderen Sichtgerätes (112) an den unteren Datenbus (LDB) der Bildschirm-Steuereinheit (10) angeschlossen ist.

4. Schaltungsanordnung zur Durchführung des Verfahrens nach einem der Ansprüche 1 oder 2 zum unabhängigen Betrieb zweier in Single Scan-Betriebsart arbeitender, einen Dateneingang (D) und einen Taktsignaleingang (C) aufweisender Sichtgeräte (210, 212; 214, 216), deren eines (210; 214) dazu bestimmt ist, eine linke Teilfläche und deren anderes (212; 216) eine rechte Teilfläche eines Vollbildes anzuzeigen, umfassend eine auf Dual Scan-Betriebsart eingestellt ; Bildschirmsteuereinheit (10) mit einem oberen Datenbus (UDB), einem unteren Datenbus (LDB) und einem Steuerungsbus (CB), wobei der Taktsignaleingang (C) des die eine Teilfläche anzeigenden Sichtgeräts (210, 214) direkt und der Taktsignaleingang (C) des die andere Teilfläche anzeigenden Sichtgeräts (212, 216) über eine zählende Torschaltung (218) an den Steuerungsbus (CB) der Bildschirm-Steuereinheit (10) und die Dateneingänge (D) der Sichtgeräte (210, 212; 214, 216) parallel an einen Datenbus (UDB; LDB) der Bildschirm-Steuereinheit (10) angeschlossen sind.

## Claims

1. Method for independent operation of a plurality of visual display units from one screen control unit, which emits clock signals and a number of character-related or pixel-related video data signals corresponding to the line and column resolution of a two-dimensional rectangular raster image which is to be displayed on a full screen, the clock and video data signals associated with rectangular subareas of the raster image being in each case supplied to a visual display unit (110, 112; 210, 212, 214, 216), and the sum of the character areas or pixels which can be driven separately on all the visual display units (110, 112; 210, 212, 214, 216) being less than or equal to the number of clock and video data signals which are emitted by the screen control unit (10), characterized in that the visual display units (110, 112; 210, 212, 214, 216) are operated in the single scan mode from a screen control unit (10) which is set to the dual scan mode.

2. Method according to Claim 1, in which the sum of the characters and pixels which can be displayed on all the visual display units (110, 112; 210, 212, 214, 216) is greater than the number of video data signals which are emitted by the screen control unit (10), and clock and/or video data signals are supplied to at least a part of a subarea of more than one visual display unit.

3. Circuit arrangement for carrying out the method according to one of Claims 1 or 2 for independent operation of two visual display units (110, 112) which are operated in the single scan mode, have a data input (D) and a clock signal input (C) and one of which (110) is intended for displaying an upper subarea of a frame, and the other (112) of which is intended for displaying a lower subarea of a frame, comprising a screen control unit (10) which is set up for the dual scan mode and has an upper data bus (UDB), a lower data bus (LDB) and a control bus (CB), the clock signal inputs (C) of both visual display units (110, 112) being connected in parallel to the control bus (CB) of the screen control unit (10), the data input (D) of one visual display unit (110) being connected to the upper data bus (UDB), and the data input (D) of the other visual display unit (112) being connected to the lower data bus (LDB) of the screen control unit (10).

4. Circuit arrangement for carrying out the method according to one of Claims 1 or 2 for independent operation of two visual display units (210, 212; 214, 216) which are operated in the single scan mode, have a data input (D) and a clock signal input (C), and one (210; 214) of which is intended for displaying a left-hand subarea of a frame and the other (212; 216) of which is intended for displaying a righthand subarea of a frame, comprising a screen control unit (10) which is set up for the dual scan mode and has an upper data bus (UDB), a lower data bus (LDB) and a control bus (CB), the clock signal input (C) of the visual display unit (210, 214) which is displaying one subarea being connected directly to a control bus (CB) of the screen control unit (10), the clock signal input (C) of the visual display unit (212, 216) which is displaying the other subarea being connected via a counting gate circuit (218) to the control bus (CB) of the screen control unit (10), and the data inputs (D) of the visual display units (210, 212; 214, 216) being connected in parallel to a data bus (UDB; LDB) of the screen control unit (10).

## Revendications

1. Procédé pour faire fonctionner indépendamment plusieurs appareils de visualisation sur une unité de commande d'écran qui fournit des signaux de synchronisation et un nombre de signaux de données d'images se rapportant à des signes ou à des points d'images correspondant à une résolution en lignes et en colonnes d'une image de trame rectangulaire bidimensionnelle à présenter sur un écran complet, les signaux de synchronisation et les signaux de données d'image faisant partie de sous-surfaces rectangulaires de l'image de trame étant envoyés chaque fois à un appareil (110, 112 ; 210, 212, 214, 216) de visualisation et la somme des surfaces de signes ou des points d'images pouvant être commandés séparément de tous les appareils (110, 112 ; 210, 212, 214, 216) de visualisation étant inférieure ou égale au nombre des signaux de synchronisation et des signaux de données d'images fournis par l'unité (10) de commande d'écran,
caractérisé
en ce que l'on fait fonctionner les appareils (110, 112 ; 210, 212, 214, 216) de visualisation en mode de fonctionnement Single Scan sur une unité (10) de commande d'écran réglée sur le mode de fonctionnement Dual Scan.

2. Procédé suivant la revendication 1, dans lequel la somme des signes ou des points d'images pouvant être présentée sur tous les appareils (110, 112 ; 210, 212, 214, 216) de visualisation est supérieure au nombre des signaux de données d'images fournis de l'unité (10) de commande d'écran et dans lequel des signaux de synchronisation et/ou des signaux de données d'images d'au moins une partie d'une sous-surface sont envoyés à plus d'un appareil de visualisation.

3. Montage pour la mise en oeuvre du procédé suivant l'une des revendications 1 ou 2 pour faire fonctionner indépendamment deux appareils (110, 112) de visualisation qui fonctionnent en mode de fonctionnement Single Scan, qui comportent une entrée (D) de données et une entrée (C) de signaux de synchronisation, dont l'un (110) est prévu pour afficher une sous-surface supérieure et dont l'autre (112) est prévu pour afficher une sous surface inférieure d'une image complète, comprenant une unité (10) de commande d'image réglée sur le mode de fonctionnement Dual Scan, ayant un bus (UDB) de données supérieur, un bus (LDB) de données inférieur et un bus (CB) de commande, les entrées (C) de signaux de synchronisation des deux appareils (110, 112) de visualisation étant raccordées en parallèle au bus (CB) de commande de l'unité (10) de commande d'écran, l'entrée (D) de données de l'un (110) des appareils de visualisation étant raccordée au bus (UDB) de données supérieur et l'entrée (D) de données de l'autre appareil (112) de visualisation étant raccordée au bus (LDB) de données inférieur de l'unité (10) de commande d'écran.

4. Montage pour mettre en oeuvre le procédé suivant l'une des revendications 1 ou 2 pour faire fonctionner indépendamment deux appareils (210, 212; 214, 216) de visualisation qui travaillent en mode de fonctionnement Single Scan, qui comportent une entrée (D) de données et une entrée (C) de signaux de visualisation, dont l'un (212 ; 214) est destiné à afficher une sous-surface de gauche et dont l'autre (212 ; 216) est destiné à afficher une sous-surface de droite d'une image complète, comprenant une unité (10) de commande d'écran réglée sur le mode de fonctionnement Dual Scan, comportant un bus (UDB) de données supérieur, un bus (LDB) de données inférieur et un bus (CB) de commande, l'entrée (C) de signaux de synchronisation de l'appareil (210, 214) de visualisation affichant l'une des sous-surfaces étant raccordée directement et l'entrée (C) de signaux de synchronisation de l'appareil (212, 216) de visualisation affichant l'autre sous-surface étant raccordée par l'intermédiaire d'un circuit (218) de porte compteur au bus (CB) de commande de l'unité (10) de commande d'écran et les entrées (10) de données des appareils (210, 212; 214, 216) de visualisation étant raccordées en parallèle à un bus (UDB ; LDB) de données de l'unité (10) de commande d'écran.
